# EUROPEAN PATENT APPLICATION

(11) **EP 4 067 388 A1**
(43) Date of publication of application: **05.10.2022**
(21) Application number: 21165507.1
(22) Date of filing: 29.03.2021
(51) Int. Cl.: C08B 37/00, A23L 29/231, C08L 5/06

(54) **PROCESS FOR EXTRACTION OF PECTIN CONTAINING PRODUCT AND CITRUS FIBER**

(71) Applicant: DuPont Nutrition Biosciences ApS, 1411 Copenhagen K (DK)
(72) Inventor: The designation of the inventor has not yet been filed
(74) Representative: DuPont EMEA

(57) **Abstract**

This invention relates to a process for simultaneous extraction of a high HE pectin containing product and a functionalized, high water binding citrus fiber product. The invention further relates to the use of the obtained products for acidified milk applications stabilization.

## Description

### FIELD OF THE INVENTION

This invention relates to a process for simultaneous extraction of a high HE pectin containing product and a functionalized, high water binding citrus fiber product. The invention further relates to the use of the obtained products for acidified milk drink stabilization.

### BACKGROUND OF THE INVENTION

There is a growing consumer interest for foods and food ingredients that are produced using methods retaining naturalness of the raw material, and in absence or leaner chemically modified components. This consumer approach has been partly responded by the industry by offering reformulated or new products, in which some food additives, particularly preservatives, colors, and flavors have been successfully eliminated, or replaced with more positively recognised alternative ingredients and food additive of natural origin.

However, providing non-chemically modified alternatives to certain food additives such as certain types of modified starches and hydrocolloids has remained to be a challenge due to absence of economically feasible methods to provide new products to deliver unique and desired functionalities (e.g. gelling, viscosity providing, stabilizing) without negatively affecting the sensory properties (e.g. color, odor, taste) of the food systems.

Pectin is a commonly used additive in the food industry. Pectin is a structural polysaccharide typically found in the form of a water insoluble parent pectic substance - protopectin - in the primary cell wall and the middle lamella of green land plants such as fruit and vegetables. Major sources of commercial pectin products are citrus peel and apple pomace in which protopectin represents 10-40% by weight of the dry matter.

Pectin comprises linear galacturonan chains (polymer of α-(1-4)-linked-D-galacturonic acid) which are interrupted with rhamno-galacturonan backbones (polymers of the repeating disaccharide α-(1-4)-D-galacturonic acid-α-(1-2)-L-rhamnose), which often has side chains of polymeric arabinogalactans glycosidic linked to the O-3 or O-4 positions of L-rhamnose. The galacturonan sequences can have D-xylose and D-apiose glycosidic linked to their O-2 or O-3 positions, which also can be substituted with ester-linked acetyl groups. The long chains of α-(1-4)-linked D-galacturonic acid residues are commonly referred to as "smooth regions", whereas the highly branched rhamnogalacturonan regions are commonly referred to as the "hairy regions".

Pectin molecules have a molecular weight of up to more than 200,000 Da and a degree of polymerization more than 1000 units. A proportion of the carboxylic acid groups of the galacturonic acid units are methyl-esterified. In plants the residual carboxyl groups are partly or completely neutralized with cations of calcium, potassium and magnesium which inherently are contained in the plant tissues.

The source of pectin will also govern to some extent whether or not other ester groups are present in the pectin structure. In this respect, it is known that some pectins comprise acetyl groups. Here typically the hydroxyl groups on C₂ or C₃ may be acetylated. By way of example, the sugar beet pectin is in some extent acetylated at O-2 and/or O-3 of the galacturonic acid residues.

The structure of pectin, in particular the degree of esterification, determines its physical and/or chemical properties. For example, pectin gelation depends on the chemical nature of pectin, especially the degree of esterification and degree of polymerization. In addition, however, pectin gelation also depends on the pectin concentration and environmental conditions like soluble solids content, the pH and calcium ion concentration.

### BRIEF DESCRIPTION OF THE DRAWINGS

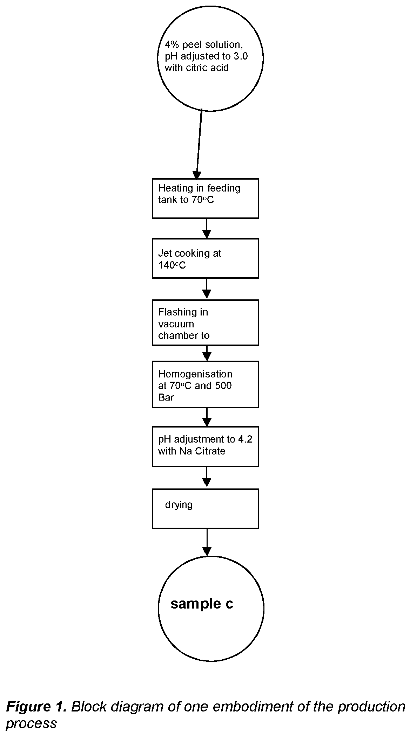

**Figure 1****.** *Block diagram of one embodiment of the production process*
**Figure 2****.** *Viscosity of 4% NAP20110005 as a function of temperature*
**Figure 3****.** *Surface tension of 0.1% NAP20110005 as a function of temperature (double determination)*
**Figure 4****.** *Syneresis test on yoghurt samples*
**Figure 5****.** *Meltdown profile of ice creams*

### SUMMARY OF THE INVENTION

It is the object of the invention to provide a process for simultaneous production of a high HE pectin containing product for acidified milk drink stabilization and a functionalized, high water binding citrus fiber product. Both products are produce by using only physical treatments and pH adjustments, without chemical modifications, therefore both be clean label solutions for the food industry.

The benefit about this production is a combined production of 2 unique commercial products with strong functional characteristics within the clean label segments and with a strong production cost benefit, namely complete use of peel material into high functional products, using partly one production line.

### DETAILED DESCRIPTION OF THE INVENTION

The first embodiment of the present invention covers a process containing the following steps:
a) milling the dry pectin-containing raw material to less than 1 mm;
b) pH adjustment to pH between 2 and 4;
c) jet cooking at 120-160°C;
d) flashing in vacuum chamber down to temperature between 60-90°C ;
e) homogenization/shear;
f) centrifugation;
g) precipitation of high Pectin supernatant in alcohol and drying;
h) parallel to washing of the precipitate citrus fiber with alcohol and drying.

Using the process, described, where a high solid "citrus fiber" is washed with alcohol, only a limited amount of alcohol and thus regeneration capacity is required.

The term "pectin" is to be understood as a water-soluble form of pectic substance obtained by extraction of pectin from a plant material. Pectin has a structure comprising blocks of linear galacturonan chains (polymer of α-(1-4)-linked-D-galacturonic acid) which are interrupted with rhamno-galacturonan backbones (polymers of the repeating disaccharide α-(1-4)-D-galacturonic acid-α-(1-2)-L-rhamnose), which often have side chains of polymeric arabinogalactans glycosidic linked to the O-3 or O-4 positions of L-rhamnose. The galacturonan sequences can have D-xylose and D-apiose glycosidic linked to their O-2 or O-3 positions, which also can be substituted with ester-linked acetyl groups. The long chains of α-(1-4)-linked D-galacturonic acid residues are commonly referred to as "smooth regions", whereas the highly branched rhamnogalacturonan regions are commonly referred to as the "hairy regions".

The "pectin-containing raw material" referred in the present invention is preferably obtained from citrus fruits, such as limes, lemons, grapefruits, mandarins, tangerines, pomelos, and oranges.

In order to obtain the pectin-containing raw material, the fruits or vegetables are treated depending on the type of fruit and vegetable in a manner commonly known by persons skilled in the art. This may comprise disintegrating or pressing the material to separate juice and oil, followed by several washes with water to remove soluble solids like sugars and residues of oil and fat. The washed material can be pressed and used directly for pectin extraction or dried to more than 85% dry matter to be safe for transport or storage.

The "degree of esterification" (DE) means the extent to which free carboxylic acid groups contained in the galacturonic acid units of pectin have been methyl esterified. The resultant pectin is referred to as "high ester pectin" ("HE pectin" for short) if more than 50% of the carboxyl groups are esterified. The resultant pectin is referred to as a "low ester pectin" ("LE pectin" for short) if less than 50% of the carboxyl groups are esterified. If the pectin does not contain any - or only a few - esterified groups, it is usually referred to as pectic acid.

In yet another aspect, the present invention is directed to the use of the citrus fiber as a texturiser or viscosifier in food products.

The functional citrus fiber product obtained by the process of the present invention has strong water binding and neutral taste.

The term "citrus fiber," as used herein, refers to a fibrous pecto-cellulosic component obtained from citrus pulp.

### EXPERIMENTAL SECTION

### EXAMPLES 1 - ISOLATION OF THE HIGH PECTIN CONTAINING FRACTION

### I. Material and methods

Peel material from orange, Argentine lemon, Apatzingan lime and Mexican lime was received from DCMXT and stored in the freezer for subsequent extraction experiments.

Peel extraction trials were run with all the peels, running with same process conditions:

### Standard pectin extraction procedure:

The amount of peel chosen for the extraction was varied according to the yield expected in an attempt to simulate realistic process conditions, where the pectin in liquor (PIL) is kept relatively constant.

### Procedure:

1. 200 g lemon peel or 220 g orange peel or 170 g lime peel was dispersed in hot deionised water to a total weight of 5000 g in a 5000 ml glass bulb with agitator.
2. Temperature was adjusted to 72°C and pH adjustment to 2.0 at 72°C (34% HNO3)
3. Extraction was run for 3 hours with continuous agitation at 72°C.
4. Subsequently the pectin liquor was isolated by centrifugation at 3500 rpm for 15 minutes on a Rotixa 120 centrifuge from Hettich Zentrifugen.
5. The solid remainder was washed and centrifuged 3 times, using 1500 ml of deionised water each time and with 20 minutes of stirring before centrifugation each time. During the first wash the temperature was kept at 72°C, and during the next 2 washes the temperature was 68°C.
6. The pectin liquor and supernatants from the washing steps were combined and vacuum-filtered (using filter aid) on a Buchner funnel.
7. pH was adjusted to 3.0 at approx. 45°C with diluted ammonia.
8. The pectin liquor was ion-exchanged on an ion exchange column (3.0 liter/hour was pumped through a 1.5 liter column volume). The column was initially regenerated by pumping 2 liter of 10% NaCl through the column, followed by hot deionised water.
9. The pectin liquor was concentrated by vacuum evaporator as much as possible (max temperature during evaporation was 60°C).
10.The concentrated pectin was precipitated in IPA (ratio 1:1), by adding the pectin liquor as a squirt into the IPA, while agitating the IPA.
11.The pectin precipitate was washed twice with 65% IPA , dried and milled.
12. The milled pectin sample was weighed and sent for analysis.

In the very first extraction trial (with lemon peel) the pectin liquor after centrifugation and the supernatants from the washing steps were kept separate to evaluate the extra yield obtained through washing and any differences in pectin composition (trial 2261/1-1 and 2261/1-2). This is especially relevant background knowledge, if comparing data with lab extractions from DCMXT, where no washing is performed in lab scale, and where the yield is calculated.

Overview of standard extraction trials with various raw materials:
2261/1-1 and 2261/1-2: Lemon peel
2261/3: Apatzingan lime peel
2261/4: Tecoman lime peel
2261/5: Orange peel

### Effect of milling:

Particle size of the 4 peel raw materials varied, and especially the lemon peel and the orange peel had a relatively small particle size of typically 1-4 mm, compared to around 3-8 mm particle size for the other peel raw materials.

To demonstrate the effect of particle size the Apatzingan lime peel was milled on a Retch Mill (2.0 mm sieve) and extracted with the standard extraction procedure and compared with the unmilled pectin 2261/3.

### Extraction trial:

2261/6.

### Effect of pH during extraction (pH fractionation):

Extended lab extraction trials were performed with lemon peel, where pH fractionation was run in the following way:
An initial extraction at pH 2.3 and 72°C was made with 220 g lemon peel and 4780 g deionised water, following in other respects the standard extraction procedure. The washed peel remainder (1500 g wet material) was subsequently mixed with 3400 g deionised water and extracted at pH 1.7 and 68°C for 2 hours (the lower extraction temperature was chosen to minimise molecular weight and DE reduction at this low pH). The extracted pectin at pH 1.7 was further treated and isolated, following the standard extraction procedure.

The 2 pectin fractions obtained were compared with a "non-fractionated" pectin product, made by extracting 170 g lemon peels in 4830 g deionised water at pH 1.7 and 68°C for 3 hours, following in other respects the standard extraction procedure.

### Extraction trials:

2261/7: Lemon peel, extracted at pH 2.3 and 72°C
2261/7-1: Washed peel from 2261/7, extracted at pH 1.7 and 68°C.
2261/8: Lemon peel, extracted at pH 1.7 and 68°C.

### Effect of adding sequestrants (Na-hexametaphosphate):

By adding sequestrants during extraction calcium should, in theory, be bound, and therefore the pectin should be extracted much more easy and with lower viscosity of the pectin liquor due to lack of available calcium.

Therefore 170 g lemon peel was extracted in 4830 g deionised water with the addition of 5g Na-hexametaphosphate to the deionised water and extraction conditions pH 2.3 and 72°C for 3 hours, and following the standard extraction procedure. As calcium should be bound by the hexametaphosphate, the ion exchange step may not be needed. There the pectin liquor was split into 2 portions, one part was ion exchanged and the other part was not.

The above trial with hexametaphospate addition plus ion exchange was repeated with even milder extraction conditions, namely extraction at pH 3.0 at 55°C for 3 hours to see, if such mild extraction conditions are possible with acceptable yield, when using hexametaphos-phate.

### Extraction trials:

2261/9: Lemon peel, extracted at pH 2.3 and 72°C with hexametaphosphate added and without ion exchange step.
2261/9-1: Lemon peel, extracted at pH 2.3 and 72°C with hexametaphosphate added and with ion exchange step.
2261/11: Lemon peel, extracted at pH 3.0 and 55°C with hexametaphosphate added and without ion exchange step.

### Effect of extraction with ion exchange resin:

By adding ion exchange resin to the peel during extraction again - as for hexametaphosphate - all calcium should be bound, giving much easier extraction with higher yield and lower viscosity of the pectin liquor.

Two extraction trials were run with a big surplus of ion exchange resin and without any optimisation of ion exchange resin dosage. The ion exchange resin used was Amberlite 200 C cationic resin from Rhöm&Haas.

170 g lemon peel was extracted in 4830 g of deionised water with addition of 340 g ion exchange resin at pH 2.3 and 72°C for 3 hours. No ion exchange treatment was performed after filtration. Otherwise the standard extraction procedure was followed. This extraction trial was repeated, using even milder extraction conditions, namely pH 3.0 at 72°C for 3 hours.

### Extraction trials:

2261/14: Lemon peel, extracted at pH 2.3 and 72°C with ion exchange resin added and without ion exchange step.
2261/15: Lemon peel, extracted at pH 3.0 and 72°C with ion exchange resin added and without ion exchange step.

### Effect of jet cooking:

Jet cooking is known to be a very efficient treatment of material to open up cell structures and could therefore improve yield and also molecular weight of pectin (due to potentially shorter extraction times).

Lemon peels were milled on Retch Mill, using a 400□ sieve. 1.33 kg milled lemon peel was dispersed in 38.67 kg of deionised water at room temperature. Jet cooking was then performed at Central Soya, Århus, on a specially designed UHT pilot plant, which was equipped with a jet cooker unit, having concentric openings for liquid and steam. This design enables a very efficient mixing of liquid and steam with very strong pressure-cavitation phenomenae, rupturing the cell walls. After steam injection the peel treated was cooled down in a vacuum flash chamber, where vapour was flashed off.

Jet cooking conditions were:
- Peel dispersion temperature before jet cooking: approx. 20°C
- Jet cooking at 130°C with approx. 3 seconds holding time
- Cooling to approx. 50-60°C in the vacuum flash chamber
- Filling in plastic containers and subsequent quick cooling in ice water to room temperature.

The jet cooking experiments were set up as follows:

| Sample size | Jet cooking treatment | Centrifugation immediately after jet cooking step | Ekstraction at pH 2.0 and 68°C for 2 hours before centrifugation |
|---|---|---|---|
| 10 kg | Jet cooking at pH as is | Exp. 2261/12-1-1 | Exp. 2261/12-1-2 |
| 10 kg | Non-jet cooked reference at pH as is | Exp. 2261/12-2-1 | Exp. 2261/12-2-2 |
| 10 kg | Jet cooking after pH adjustment to pH 2.0 | Exp. 2261/12-3-1 | Exp. 2261/12-3-2 |
| 10 kg | Non jet cooked reference pH adjusted to pH 2.0 | Exp. 2261/12-4-1 | Exp. 2261/12-4-2 |

Due to the workload of running 8 experiments, exp. 2261/12-1-2 and 2261/12-2-2 were stored at 5°C and extracted the following day, whereas the other 6 experiments were run the same day as the jet cooking pre-treatment.
Also due to the workload, no washing steps were included. Sufficient water was added to be able to centrifuge and filter the samples. The yield in % was calculated.

### II- RESULTS

The extraction yield, S.P. and the cost factor (peel cost x stabilizing point/yield) are shown in enclosure 1. Analytical data - degree of esterification (DE), galacturonic acid content, % pectin in sample, transmission, molecular weight, molecular weight distribution and calcium sensitivity (CS) - are shown in enclosure 2.

From the initial extraction trial with lemon (2261/1-1 and 2261/1-2), it is seen that the pectin obtained from the washing procedure is somewhat weaker (higher S.P); analytically a lower molecular weight is seen, which is expected due to the longer treatment at elevated temperatures. However, the deviation is relatively limited. Therefore combining the first extract and the washing liquor will be in line with commercial production procedure and will not change the pectin characteristics dramatically, compared the DCMXT lab procedure.

It is rather evident from the extraction trials on the lemon peel (2261/1; 2261/7; 2261/7-1; 2261/8) that extraction pH and temperature has a dramatic effect on the pectin products composition (DE, Mw and CS) and thereby also on the quality of the pectin with respect to stabilisation of drinking yoghurt. Other things being equal; a high DE, a high molecular weight and high CS seem to have a positive effect on the stabilising ability. This does of course not take into account that the different pectin molecules obtained by different extraction conditions may also differ in neutral sugars, molecular weight distribution, etc. Variations in molecular weight distribution can be seen from enclosure 2. The molecular weight distribution analysis does not correlate very well with our normal MW analysis based on viscosity measurement at low pectin concentrations.

The extraction trials with lemon (a good quality lemon with high molecular weight and high calcium sensitivity) also shows that extremely strong pectins can be produced by modifying the extraction conditions to 68-72°C and pH 2.0 and generally avoiding molecular weight breakdown during the subsequent processing steps. In this way pectin with an S.P. value **below 0.10** was produced (2261/1, 2261/12-2-2, 2261/12-4-2). These strong pectins were also superior to our normal commercial pectins in low pH and low MSNF drinking yoghurt (see enclosure 1). When comparing 2261/7, 2261/7-1 and 2261/8 it is clear that the extra pectin yield obtained at low pH (2261/7-1) is of low DE and low Mw and therefore of relatively poor quality. To get very strong pectin products, this fraction should be avoided.

The extractions furthermore indicate that the lime peels selected (with a relatively high calcium sensitivity) may be economically at least as efficient to use for production of AMD pectin as the orange peel (2261/3, 2261/4 and 2261/6 versus 2261/5).

Milling of the lime peel showed the expected effect, namely increased yield and improved total economy, but also strong reduction in transmission (2261/6 versus 2261/3).

Extraction with hexametaphosphate added showed the following results:
Limited increase in yield was obtained due to the hexametaphosphate (2261/9-1 versus 2261/7) and also limited effect on the viscosity of the pectin liquor was seen. This was surprising, but could be due to a too low hexametaphosphate dosage in these experiments. If ion exchange is not performed (2261/9), a very poor pectin quality regarding drinking yoghurt stabilising ability was obtained. The yield was higher than for 2261/9-1 and 2261/7, probably due to the hexametaphosphate staying in the precipitated and dried pectin.
The extraction trial 2261/11 with hexametaphosphate at higher pH (3.0) did give very low yield and bad stabilising properties; again indicating that addition of hexametaphosphate (at this dosage level) did not have any positive effect on yield or pectin quality.

Extraction with ion exchange resin added had a dramatic effect. The yield was increased by around 40% for 2261/14 compared to 2261/7, the viscosity of pectin liquor was very low, and filtration was very easy. The resin was removed during the filtration step. The final product had an extremely high molecular weight and the functionality was excellent (S.P of less than 0.10). Another extraction trial with ion exchange resin added, this time at the higher pH of 3.0 (2261/15), should investigate if acceptable yield could be obtained under these extremely mild conditions, which should otherwise secure that no pectin degradation would take place. Indeed a very high pectin quality with high molecular weight and good transmission and low S.P, but also high yield - around 249 - was obtained and this demonstrates that the addition of ion exchange resin allows extremely economical production of AMD pectin even at pH 3. A drawback about using the ion exchange resin is that presently no realistic commercial method has been developed/tested to isolate and regenerate the resin from the peel waste for reuse.

The jet cooking experiments showed the following:
Jet cooking had a strong effect on the solubilisation of pectin from the peel, giving an immediate solubilisation with high yield, especially at pH 2.0. The yield could be further increased by a subsequent extraction at 68°C and pH 2.0 for 2 hours. The highest yield obtained was by jet cooking at pH 2, followed by extraction at pH 2, 68°C for 2 hours, namely 33%, which was more than 35% higher than for a similar process without jet cooking (2261/12-4-2 versus 2261/12-3-2).
The functionality of the jet-cooked products was high (e.g. S.P of 0.11 % for 2261/12-4-2), probably due to the high molecular weights obtained. This in total gives a very good total production economy (see enclosure 1). Furthermore the extraction procedure will be very short. It can be seen from enclosure 1 that the pectin products produced with the jet cooking procedure have a relatively low galacturonic acid content, probably due to dissolution of some cell wall components (cellulose, protein?) which also results in extremely bad transmission. Due to the high molecular weight (and maybe also the dissolved cell wall components) the viscosity of the pectin liquor was high, making centrifugation and filtration difficult. Even though the jet cooking process is very promising from a functionality, yield and fast process viewpoint, there are very severe potential production difficulties necessary to address.
The very bad transmission from the jet cooking process should not give application problems in drinking yoghurt, but may be a sales obstacle in some markets. It should also be considered form a strategic point, if it is wise to market a sort of "semi-refined" pectin, even if it can meet the specifications for pectin.

### III- CONCLUSION

It is possible by adjustment of extraction conditions and selection of peels (high molecular weight, high DE and high CS) to produce pectin with very strong stabilizing power in drinking yoghurt, down to below 0.10 in S.P. The results indicate that the functionality and also the overall production economy can be improved significantly in DCMXT by selecting peels with the above characteristics and running the process more mildly to minimise molecular weight reduction of the pectin.

Based on the limited extraction trials it seems that also lime peel with the above-mentioned characteristics is a very good raw material for AMD pectin production, also from an economical view point.

Addition of ion exchange resin gives advantages with respect to transmission, easy processing (low pectin liquor viscosity), high functionality and a very low cost factor. There are still unsolved process issues regarding reuse of the ion exchange resin.

Jet cooking as a peel pre-treatment results in highly functional pectin products, very high yields and very short extraction processes, giving in principle very low production costs. Unsolved process issues are very high pectin liquor viscosity/difficult filtration. It has to be considered, if such very low transmission "semi-refined" pectin products could be of commercial interest.

### EXAMPLES 2 - functional citrus fiber production

### I. Material and methods

2.4 kg fine milled lemon peel was delivered by HCB (Lab j. 2611-43). 60 kg of a 4% peel dispersion in deionised water was made at room temperature. pH was adjusted from originally 4.5 to 3.0 (6.9 g citric acid (material 110311) added per 100 g peel). Afterwards the 60 kg peel dispersion was heated to 70°C in the feeding tank, before running the process. The pH adjustment before spray drying was done, adding 10 g Na-Citrate (material 103088) per 100 g peel dry matter, increasing pH from 3 to 4.2. The peel dispersion at 70°C before jet cooking was rather thin flowing. The sample A was thicker, but still pourable, having detectable particles, whereas sample C was just hardly pourable at 50-60°C and complete smooth in texture.

Spray drying of sample C (now approx 40°C hot sample) ran without problems, using a positive pump to the spray dryer. The powder obtained was light in colour, not dusty and with high density (visual inspection). The sample was named NAP20110005.

### Composition analysis

NAP20110005 was split up in the following parts:
- 50% was soluble in 20°C deionised water (25% alcohol insoluble and 25% alcohol soluble)
- 50% was insoluble in 20°C deionised water

The alcohol insoluble fraction is pectin of relatively high quality. The molecular weight would probably be higher, if the hot jet-cooked lemon peel solution was spray dried immediately. The 25% alcohol soluble fraction was not analysed, but is expected to be mainly sugars.

Analytical results are shown in table 1.

**Table 1. Composition of NAP20110005**

| Pectin analysis (A325) | Pectin composition in the jet-cooked lemon peels (NAP 2011-0005) | | |
|---|---|---|---|
| | NAP 2011-0005 | Water non-soluble part | Water soluble part: Alcohol insoluble fraction |
| %DE | 71.2 | 68.8 | 74.9 |
| %GA | 45.2 | 28.1 | 78.9 |
| %AGA | 43.3 | 26.9 | 75.7 |
| %Pectin | 55.6 | 91.1 | 78.0 |
| Pectin Mw* | | | 117000 |

| | | | |
|---|---|---|---|
| * Determination based on intrinsic viscosity | | | |

### Some physico chemical analysis and sensory evaluation

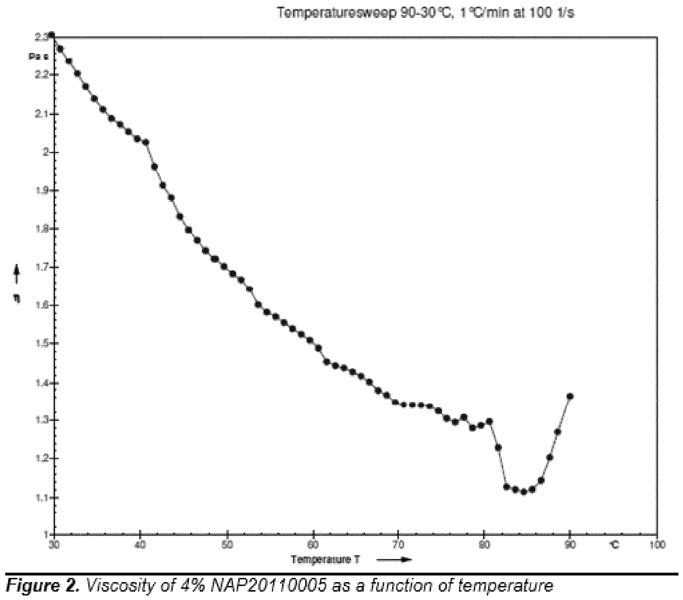

Viscosity of a 4% dispersion of NAP20110005 was measured at shear rate 100s⁻¹ from 90°C to 30°C to evaluate viscosity level and temperature dependency, mainly to know the viscosity level at the spray-drying step and to see, if a higher temperature at the spray-drying step could be advantageous and could open up for a higher peel concentration during processing. As can be seen from figure 2, there is a temperature effect on viscosity, but not dramatic.

The protein reaction ability at low pH was investigated to see, if the free pectin in the sample can stabilise protein at low pH. The standard method A760 for evaluating pectin for drinking yoghurt was used. The results are shown in table 2. It can be seen that a minimum in sediment and viscosity is obtained at 0.6% concentration, however with an extremely high viscosity and sediment, compared to standard drinking yoghurt pectin. The high viscosity is due to the water binding, but a combination of high viscosity and a protein stabilising ability makes NAP20110005 interesting in thick/gelled acidified protein systems, such as stirred yoghurt.

**Table 2. Stability test in GDL acidified milk system (A760)**

| **Sample** | **Concentration, %** | **Sediment, %** | **Viscosity, cP** |
|---|---|---|---|
| NAP20110005 | 0.30 | 41.1* | 1350 |
| NAP20110005 | 0.60 | 32.8* | 387 |
| NAP20110005 | 0.90 | 38.1* | 534 |
| Pectin 1387 lot 1820916673 | 0.16 | 2.1 | 15.6 |
| Pectin 1387 lot 1820916673 | 0.18 | 1.6 | 17.0 |
| Pectin 1387 lot 1820916673 | 0.20 | 1.3 | 17.2 |

| | | | |
|---|---|---|---|
| *relative deviation between double determination below 3% | | | |

A sensory evaluation was done by 4 experts in pectin taste, evaluating peel dispersion before process, sample A, sample C (NAP20110005) and Herbacel AQ Plus Citrus. Both samples A and C were significantly more neutral in taste than the untreated peel dispersion, however with a strong peel off-taste, compared to Herbacel AQ Plus Citrus. Colour of samples A and C was also lighter than untreated peel but darker than Herbacel AQ Plus. Sample A was thicker in texture than the untreated peel suspension, but still with some grittiness. Sample C was thicker than sample A and completely smooth in texture, approx same thickness, but considerably more smooth in texture than Herbacel AQ Plus Citrus.

### Stirred yoghurt test

NAP20110005 was tested against Herbacel AQ Plus Citrus in a 0.5% fat yoghurt recipe, using dosages of 0.15, 0.30 and 0.45%. Reference was GRINDSTED^{®} Pectin SY 200 in 0.12% dosage (see table 3). Yomix 860 was used as culture. Processing details - see dairy journal DK DK17402-1.

**Table 3. Yoghurt recipe**

| **Ingredients in %** | | | | | | | | |
|---|---|---|---|---|---|---|---|---|
| **Ingredient Name** | **1** | **2** | **3** | **4** | **5** | **6** | **7** | **8** |
| Water (Tap) | 83.50 | 83.38 | 83.35 | 83.20 | 83.05 | 83.35 | 83.20 | 83.05 |
| Skimmed milk powder | 10.43 | 10.43 | 10.43 | 10.43 | 10.43 | 10.43 | 10.43 | 10.43 |
| Cream 38 % fat | 1.07 | 1.07 | 1.07 | 1.07 | 1.07 | 1.07 | 1.07 | 1.07 |
| Sucrose | 5.00 | 5.00 | 5.00 | 5.00 | 5.00 | 5.00 | 5.00 | 5.00 |
| | | 0.12 | | | | | | |
| NAP2011005 fibre | | | 0.15 | 0.30 | 0.45 | | | |
| (FHC 316) Herbacel AQ Plus Citrusfaser | | | | | | 0.15 | 0.30 | 0.45 |
| Total % | **100** | **100** | **100** | **100** | **100** | **100** | **100** | **100** |

Samples were evaluated organoleptically by 2 experts:
- Sample DK17402-1 1: Most thin sample, no graininess, light colour, neutral taste.
- Sample DK17402-1 2: Thicker than sample 1, no graininess, light colour, neutral taste.
- Sample DK17402-1 3: Slightly thinner than sample 2, no graininess, light colour, neutral taste.
- Sample DK17402-1 4: Thicker than sample 2, slightly darker colour, no graininess, slight bitter and astringent taste.
- Sample DK17402-1 5: Compared with sample 4 thicker, slightly darker, slightly more bitter and astringent taste, no graininess.
- Sample DK17402-1 6: Thicker than sample 1, but thinner than sample 2 and 3, no graininess, light colour and neutral taste.
- Sample DK17402-1 7: Thicker than sample 2 and 3, but thinner than sample 4, no graininess, light colour and neutral taste.
- Sample DK17402-1 8: Thicker than sample 4, but thinner than 5, no graininess, light colour, astringent/dry aftertaste.

Furthermore viscosity of the yoghurt samples was measured on Brookfield (table 4).

**Table 4. Brookfield viscosity data on yoghurt samples, measured at approx 10°C**

| **Method no.** | **005** | **Spindel no.:S25** | | **Speed RPM: 30** | | **Time in sec: 30** | | |
|---|---|---|---|---|---|---|---|---|
| | **Trial no: 1** | **Trial no: 2** | **Trial no: 3** | **Trial no: 4** | **Trial no: 5** | **Trial no: 6** | **Trial no: 7** | **Trial no: 8** |
| **DATE:08-03-2011** | 2000 | 3900 | 2200 | 3800 | 4500 | 2900 | 4300 | 3400 |

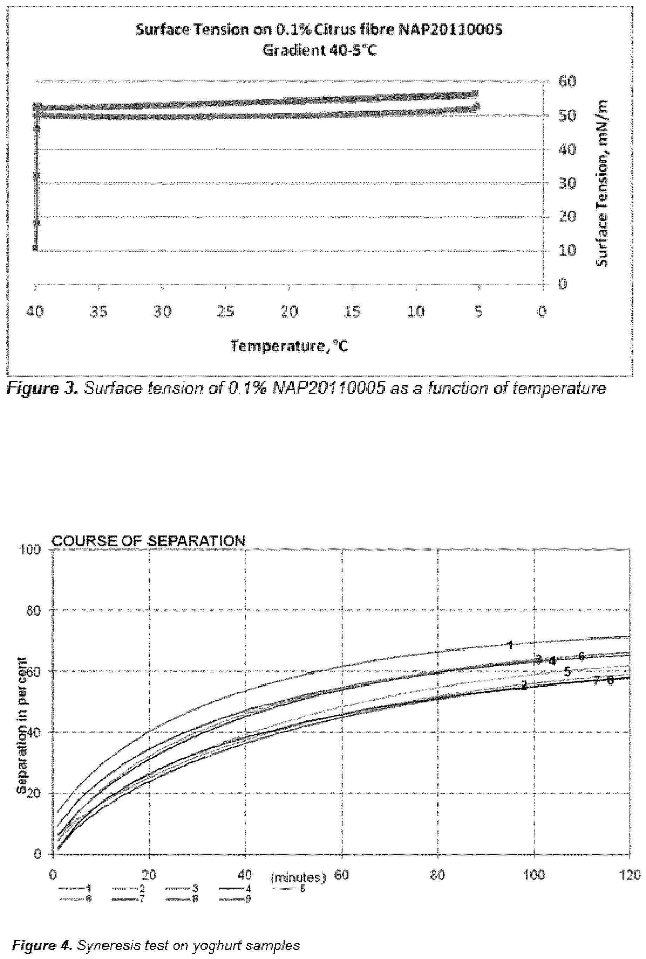

Also syneresis tests were performed on the yoghurts, showing reduced syneresis, when adding the citrus fibres (see figure 4).

### Ice cream tests

NAP20110005 was tested as an E number-free solution in 10% fat ice cream against Herbacel AQ Plus Citrus. Trials were run with 0.3% dosage of the citrus fibres, substituting both emulsifiers and stabilisers. NAP20110005 performed better than Herbacel AQ Plus Citrus with respect to air incorporation (giving lighter colour and more creaminess). Both NAP20110005 and Herbacel AQ Plus Citrus gave some powdery mouthfeel, and NAP20110005 also gave a slight bitter/citrus off-taste.

Subsequently, combinations of the citrus fibres, Meyprogen^{®} IC-Naturatex 10 Stabiliser System (Inulin, milk protein, rice flour) and egg yolk were used as E number-free solutions in 10% fat ice cream.

3 samples were references:
DK17494-1 11: CREMODAN^{®} SE 30 Emulsifier & Stabiliser System (Mono-di glycerides, LBG,
   guar, alginate, carrageenan): Commercial positive reference with E numbers.
DK17494-1 12: CREMODAN^{®} DC 100 Stabiliser System (LBG and guar) and egg york:
   Positive reference, allowing direct comparison of commercial stabilisers
   with E numbers and E number-free citrus fibre containing stabilisers. DK17494-1 13: Egg york without stabilisers. Negative reference, allowing evaluation of the effect of adding the E number-free citrus fibre containing stabilisers.

Recipe details are shown in table 5.

**Table 5. Ice cream recipe**

| **Ingredient Name** | **11** | **12** | **13** | **14** | **15** | **16** |
|---|---|---|---|---|---|---|
| Water (Tap) | 48.35 | 47.54 | 47.71 | 46.02 | 46.03 | 46.18 |
| Cream 38 % fat | 25.18 | 24.29 | 24.30 | 24.30 | 24.30 | 24.30 |
| Skimmed milk powder | 7.32 | 7.32 | 7.34 | 7.07 | 7.12 | 7.12 |
| Whey powder | 2.50 | 2.50 | 2.50 | 2.50 | 2.50 | 2.50 |
| Sucrose | 12.00 | 12.00 | 12.00 | 12.00 | 12.00 | 12.00 |
| Glucose syrup powder 32 DE, 95% TS. | 4.00 | 4.00 | 4.00 | 4.00 | 4.00 | 4.00 |
| Firmenich Vanilla 507441 T | 0.10 | 0.10 | 0.10 | 0.10 | 0.10 | 0.10 |
| Annatto Extract (Danisco) | 0.05 | 0.05 | 0.05 | 0.05 | 0.05 | 0.05 |
| Meyprogen^{®} IC-Naturatex 10 Stabiliser System | | | | 1.60 | 1.60 | 1.60 |
| (FHC 316) Herbacel AQ Plus Citrusfaser | | | | 0.36 | | |
| (AEM Kølerum) Citrus Fibre NAP 20110005 | | | | | 0.30 | 0.15 |
| CREMODAN^{®} DC 100 Stabiliser System | | 0.20 | | | | |
| CREMODAN^{®} SE 30 Emulsifier & Stabiliser System | 0.50 | | | | | |
| Egg yolk (pasteurised) | | 2.00 | 2.00 | 2.00 | 2.00 | 2.00 |
| Total % | **100** | **100** | **100** | **100** | **100** | **100** |

Solvent extractable fat (SEF) of the ice cream samples was:

| | |
|---|---|
| DK17494-1 11: | 13.87% |
| DK17494-1 12: | 16.50% |
| DK17494-1 13: | 10.18% |
| DK17494-1 14: | gelled, could not be analysed |
| DK17494-1 15: | 6.52% |
| DK17494-1 16: | 4.79% |

As can be seen the ice cream samples containing NAP20110005 are a little low in SEF.

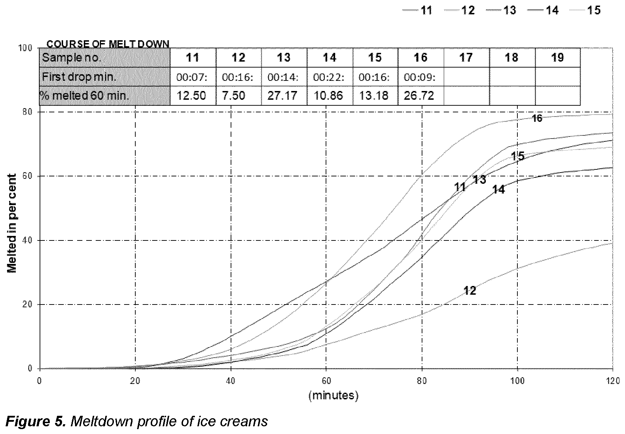

Meltdown profiles of the ice cream samples are shown in figure 5. Samples DK17494-1 13 and 16 are inferior in meltdown. Sample DK17494-1 12 has extremely slow meltdown. DK17494-1 14 and 15 are very close to the commercial standard DK17494-1 11. Thus addition of citrus fibres (both NAP20110005 and Herbacel AQ Plus Citrus) improves meltdown.

A sensory evaluation of 3 experts gave the following results:
DK17494-1 11: Very good in all aspects
DK17494-1 12: Very creamy and warm eating, almost as sample 11
DK17494-1 13: Very cold eating, no body
DK17494-1 14: Much more warm eating with much more mouth feel and chewiness than sample 13, but less good than sample 12.
DK17494-1 15: Slightly better than sample 14, being less icy and with more mouth feel. A slight citrus off-taste was noted by 2 out of 3 panellists..
DK17494-1 16: Less warm eating than sample 15, being close to sample 14 in quality. A more distinct citrus off taste was registered by 2 out of 3 panellists.

In conclusion a very good performance was seen for NAP20110005 in ice cream application.

From a functionality point of view, the products obtained by the claimed process presents a differential water binding, creamy/smooth texture, interfacial properties and protein reaction. The application tests in ice cream and stirred yoghurt confirm a very high functionality at the level of or better than the best citrus fibres on the market. It is especially interesting that the functional citrus fibres can be added at high dosage (giving high viscosity effect and reduced syneresis) before fermentation in stirred yoghurt, as this is normally a problem for most hydrocolloids.

## Claims

1. A process for simultaneous extraction of a high HE pectin containing product and citrus fiber, comprising the following steps:
i) milling the dry pectin-containing raw material to less than 1 mm;
j) pH adjustment to pH between 2 and 4;
k) jet cooking at 120-160°C;
l) flashing in vacuum chamber down to temperature between 60-90°C ;
m) homogenization/shear;
n) centrifugation;
o) precipitation of high pectin supernatant in alcohol and drying;
p) parallel to washing of the precipitate citrus fiber with alcohol and drying.

2. Process, according to claim 1, wherein the pectin-containing raw material is obtained from citrus fruits, oranges, tangerines, limes, lemons, and grapefruit.

3. Process, according to claim 1, wherein the pectin-containing raw material is milled to a particle size between 250-500 microns.

4. Process, according to claim 1, wherein the jet cooking step c) is preferably performed between 130-140°C.

5. Process, according to claim 1, wherein the centrifugation step f) is performed using preferably decanters or high-speed centrifuges.

6. High HE pectin containing product obtained by the method of any one of claims 1 to 5.

7. Citrus fiber obtained by the method of any one of claims 1 to 5.

8. Use of the products obtained by the method of any one of claims 1 to 5, as per claims 6 and/or 7 or the combination thereof, for stabilization of yogurt or ice cream applications.
